# EUROPEAN PATENT APPLICATION

(11) **EP 1 211 281 A1**
(43) Date of publication of application: **05.06.2002**
(21) Application number: 01125993.4
(22) Date of filing: 31.10.2001
(51) Int. Cl.: C08J 9/36

(54) **Coated Cover element for conduits**

(30) Priority: 02.11.2000 IT MI002370
(71) Applicant: L'Isolante K-Flex S.r.l., 20040 Roncello (MI) (IT)
(72) Inventor: Marelli, Gianfranco, 20151 Milano (IT); Spinelli, Amedeo, 20059 Vimercate (IT)
(74) Representative: Gislon, Gabriele

(57) **Abstract**

A covering element for coating and thermally insulating conduits for fluids at controlled temperature is produced in expanded elastomeric polymers and also has at least one layer of acrylic or urethane/acrylic resin of the type obtained by cross-linking prepolymers in the presence of a photoinitiator with the object of protecting the base expanded material of the sheet; the resin can be added with pigments, flame-retardant additivies and UV filters.

## Description

The present invention relates to a cover element for conduits, in particular for conduits for heated or refrigerated, cooled, fluids.

Conduits and ducts for conditioned air in large areas (airports, shopping centres, industrial sheds, trade fair centres, etcetera), just as conduits and ducts for heated or cooled fluids in general, must be coated with insulating material to reduce the exchange of heat with the surrounding area.

The use of sheets of expanded materials such as expanded nitrile rubber, SBR, EP(D)M SEBS and elastomeric polymers in general, polyethylene and polyurethanes is known for this purpose. These sheets are fixed, generally by gluing, to the outside of the conduits and in some cases must in turn be coated to increase their useful life. In greater detail, a cover is generally necessary when the conduits are exposed, for aesthetic reasons; when the sheets are made of non-elastomeric material, such as glass fibres, to form a barrier for vapour and dampness and prevent condensation from forming; when the sheets are made of elastomeric polymers to prevent deterioration of the polymers through the effect of light.

These covers are produced by painting the sheets after they have been fitted or by coating them with aluminium sheets: these are both costly processes and the treated sheets require regular maintenance, particularly if the coated conduit is outdoors.

The object of the present invention is to solve the aforesaid problems by producing elements for coating conduits, in particular for insulating coating, that are inexpensive to produce, long lasting, require little maintenance and are able to give the coated conduit a pleasant aesthetic appearance.

This object is attained by means of the invention relating to a cover element for conduits comprising a layer of expanded polymers, preferably elastomers, characterized in that it also has at least one layer of acrylic or urethane/acrylic resin of the type obtained by cross-linking prepolymers in the presence of a photoinitiator. The cover element can be any form desired although it is generally produced in the form of a sheet or tube.

According to a preferred aspect of the invention, the cover element comprises a layer of resin or pigmented paint and a layer of transparent resin, on the outside of the pigmented resin.

According to another aspect of the invention at least one of said resins contains flame-retardant additives and/or other additives such as a UV radiation absorber.

The invention also relates to a process for the production of an element of the type described above, characterized in that it comprises the steps of: preparing a cover element in expanded plastic material, coating at least part of the surface of said element in expanded material with at least one layer of resin chosen from acrylic and urethane acrylic resin, said resin comprising a prepolymer and a photoinitiator, and activating said photoinitiator to cause cross-linking of the prepolymer and its gripping to said expanded material.

The invention has numerous advantages compared with prior art; the sheets and tubes of the invention are inexpensive to produce and reliable through time, resisting delamination; moreover, the resins applied can be pigmented in the tone desired for the specific application for which they are intended. A further advantage lies in the fact that the inevitable and necessary times and costs for painting or coating the covering elements already applied to the conduits with prior art technique, are avoided; this saving is even more evident when considering that conduits coated traditionally must be repainted every year, or even more frequently when located outdoors. A further advantage is provided by the excellent protection given to the expanded polymeric material by the UV-resistant resins in combination with the pigments.

The invention will now be described in greater detail with reference to the attached figure, showing merely as a non-limiting example, a portion of sheet according to the invention, partially sectioned.

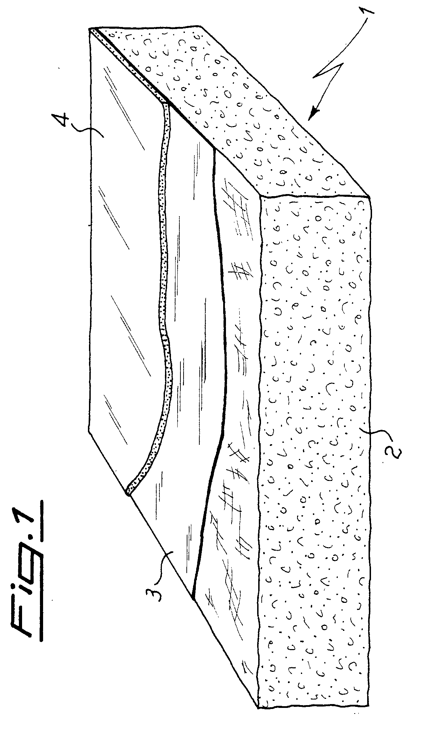

The same layered structure shown with reference to the sheet in figure 1 is present in other cover elements according to the invention, such as tubes or tubular elements, of any form and diameter. In the following description reference will be made to sheets, although this is not intended to limit the scope of the invention to sheets only, it being understood that this scope covers all cover elements of conduits, such as tubes, in expanded material and obtained according to the invention.

With reference to fig. 1, the cover element according to the invention, represented by a sheet 1, comprises a base portion 2 in expanded polymeric material and at least one layer of coating in acrylic or urethane/acrylic resin of the type obtained by cross-linking prepolymers in the presence of a photoinitiator. The base portion or layer 2 is obtained in a manner known in the art, such as through extrusion of the sheet or tubular element.

The base of expanded material is obtained from an expanded elastomeric polymer material such as nitrile rubber (NBR), EP(D)M, SBR, SEBS rubbers, from polyolefines, in particular polyethylene, and polyurethanes in general. Nitrile rubber is a preferred material.

According to the invention the cover element has at least one layer. The embodiment shown has a first layer 3, composed of a pigmented acrylic resin, to impart the desired colour to the sheet, and a second layer 4 in acrylic or urethane-acrylic resin.

The resin utilized is, at least in the outer layer and preferably in both cases, a resin of the polymerizable type by applying radiation: suitable resins are obtainable commercially, for example from BASF, and are described in the literature. Preferred resins are those described in the patents US-A-5,442,090 and US-A-6,011,078. The first patent relates to photopolymerizable acrylic urethane resins obtained through reaction of primary or secondary amine groups with hydroxyacrylates; the second describes photopolymerizable aqueous formulations without prior drying, comprising 5 to 90% of an ethylenically unsaturated polymer, in particular, although not exclusively, deriving from acrylic acid. Acrylic derivates such as epoxy (meth)acrylates, polyether (meth)acrylates and polyester (meth)acrylates (such as Laromer® by BASF), polyurethane (meth)acrylates and melamine (meth)acrylates are preferred for the purposes of the present invention.

It was in fact noted that acrylic and urethane acrylic resins have surprisingly better performances than other photopolymerizable resins, as regards gripping and easy coating of the expanded materials and final properties such as scratch resistance and protection of the sheet. Suitable photoinitiators are, for example, benzophenone, 1-hydroxycyclohexyl phenyl ketone, 4-(2-hydroxyethoxy)phenyl 2-hydroxy-2-methylpropyl ketone and their mixes, obtainable commercially, for example with the name of Irgacure® by BASF.

The innermost layer 3 can be provided with a photopolymerizable resin or with a normal paint suitable for coating expanded materials. A water-based paint with a solids content of around 60% will preferably be used. The thickness of the layer 3 if present, is less thick than the external layer 4 and is generally in the region of 10-20 µm and the quantity of resin/paint applied ranges from 5 to 40 g/m². The pigments contained in the layer 3 are pigments normally obtainable commercially and are chosen to give the desired aesthetic effect. The external layer 4 is pigmented resin or, preferably, transparent resin with a thickness ranging from 12 µm to 500 µm, with a quantity of applied resin ranging from 20 to 400 g/m², preferably from 40 to 120 and more preferably from 50 to 70 g/m². The photopolymerizable resin used for the outer layer is preferably of the type with 100% solids.

In a preferred embodiment at least the layer 4 also comprises other additives such as compounds capable of imparting flame-retardant properties, compounds capable of protecting against UV radiations and any other compounds as a function of the specific applications of the sheet. Preferred flame-retardant additives derive from bromine and additives to protect against UV are chosen from benzotriazole or triazine.

The manufacturing process of the sheets according to the invention envisages the preparation of a sheet, tube or other cover element in expanded plastic material, coating at least part, namely one side, of said sheet with at least one layer of resin selected from acrylic and urethane acrylic resin comprising a prepolymer and a photoinitiator and activating said photoinitiator to cause cross-linking of the prepolymer and its gripping to the expanded material.

More specifically, the sheets (or tubes) are initially sheets (or tubes) in vulcanized expanded elastomer, preferably rubbers such as nitrile rubbers (NBR) and the others indicated previously. To the sheets a layer 3 of pigmented water-based paint for purely aesthetic purposes and a layer 4 of photopolymerizable paint that also has protective purposes are applied in a way known in the art. In another embodiment only the layer of photopolymerizable paint, transparent or pigmented in the required manner, is applied.

The layer 3, if present, is applied to the sheet with a thickness ranging from 10 to 30 µm and generally about 20 µm and subsequently treated in an air oven to dry it. This layer, if present, or the sheet, preferably provided with a "skin", is then covered with the layer 4 of photopolymerizable paint. The suitable acrylic and urethane acrylic resins are those described and listed above. Resins with 100% or nearly 100% solids or resins with aqueous solvents that do not require complete evaporation of the solvent before polymerization (such as those described in US-A-6,011,078) are preferably used. In the case of sheets the resins and paints are applied by spreading, or knife coating, and in the case of tubular elements the resin(s) or paint are preferably applied by spraying.

After the step in which resin is applied, the sheet or tube is sent to be treated with photo-crosslinking by means of UV lamp radiation; these treatments are known in the art and are not in themselves an object of the present invention.

If desired, the sheet is then provided, on the opposite side from the one on which the paint is applied, with strips or sheets of two-sided adhesive tape to subsequently bond it to the conduits without applying any other bonding agents.

The invention will now be described in greater detail with reference to the following examples.

### Example 1.

Sheet with a protecting layer.

A sheet of vulcanized expanded rubber NBR with nominal thickness of 19 mm was coated with 45 g/m² of UV cross-linkable resin, type UV G/Ext, transparent, obtainable from BASF COATINGS of Burago Folgora (IT) and subsequently treated in UV oven to perform cross-linking.

The component thus obtained has excellent aesthetic properties, is shiny and resistant to scratching and perforation, and has the required properties of resistance to atmospheric agents, to UV and ageing.

### Example 2

Sheet with aesthetic pigmented layer and protective cross-linked UV layer.

A sheet of vulcanized expanded rubber NBR with nominal thickness 19 mm was coated with a base layer of pigmented acrylic resin, obtainable from BASF COATINGS of Burago Folgora (IT) with the name of Hydrocril and subsequently dried in an air oven, the applied quantity was equal to 18 g/m². The sheet thus coated was then coated again with 45 g/m² of UV crosslinkable urethane acrylic resin, type UV G/Ext, transparent, obtainable from BASF COATINGS of Burago Folgora and subsequently treated in a UV oven in order to perform crosslinking.

In this way a product was obtained with excellent aesthetic features, shiny and resistant to scratches and perforations, which also has intrinsic, owing to the chemical specifications of the coating, resistance to atmospheric agents, UV and ageing.

### Example 3

Sheet with a UV cross-linked and pigmented layer.

A sheet of expanded rubber according to the previous examples was coated with 50 g/m² of UV crosslinkable pigmented resin type UV G/Int M1, obtainable from BASF COATINGS of Burago Folgora and subsequently treated in a UV oven to perform cross-linking.

The component obtained has an excellent aesthetic appearance, shiny and resistant to mechanical stresses (scratch and perforation), has intrinsic properties of resistance to UV radiations and, owing to the nature of the paint used, the layer applied has its own self-extinguishing properties and hence does not alter any flame-retardant properties of the elastomeric substrate.

## Claims

1. A covering element for coating conduits comprising a layer of expanded polymeric material (2), **characterised in that** it also has at least one layer (4) of acrylic or urethane/acrylic resin of the type obtained by crosslinking prepolymers in the presence of a photoinitiator.

2. A covering element as claimed in claim 1, **characterized in that** said polymeric material is composed of elastomeric polymers.

3. A covering element as claimed in claim 1 or 2, **characterized in that** it comprises a layer (3) of resin or pigment containing paint and a layer (4) of transparent resin, external to said pigmented layer (3).

4. A covering element as claimed in any of the claims 1 to 3, **characterized in that** said resin (4) and/or said paint (3) contains at least one additive selected from compounds absorbing UV radiations, flame-retardant compounds, or a mixture thereof.

5. A covering element as claimed in any previous claim, **characterized in that** said polymers for the expanded layer (2) are selected from nitrile rubber (NBR), EP(D)M, SBR, SEBS rubbers, polyethylene and polyurethanes, and **in that** said resins are selected from urethane acrylic resins, epoxy (meth)acrylates, polyether (meth)acrylates and polyester (meth)acrylates, polyurethane (meth)acrylates and melamine (meth)acrylates.

6. A covering element as claimed in claim 5, **characterized in that** said expanded polymeric material (1) is a nitrile rubber.

7. A process of producing a covering element according to any previous claim, **characterized in** comprising the steps of: preparing an element (1) comprising a layer (2) of expanded polymeric material, coating at least part of the surface of said polymeric layer (2) with at least one layer (4) of resin selected from acrylic and urethane acrylic resins comprising a prepolymer and a photoinitiator and activating said photoinitiator to obtain crosslinking of the prepolymer and its gripping to said layer (2) of expanded polymeric material.

8. A process as claimed in claim 7, **characterized in that** the amount of resin applied to said layer (2) is within the range of 20 to 400 g/m².

9. A process as claimed in claim 7 or 8, **characterized in that** a pigment containing water-based paint (3) is applied before said application of photopolymerizable resin (4), said water-based paint (3) being applied in a quantity within the range of 5 to 40 g/m².

10. A process as claimed in claims 7 to 9, **characterized in that** adhesive means are applied to the side of the expanded polymeric layer (2) opposite to that provided with said layer of resin (4).
